# EUROPÄISCHE PATENTSCHRIFT

(11) **EP 4 028 577 B1**
(45) Veröffentlichungstag und Bekanntmachung des Hinweises auf die Patenterteilung: **11.10.2023**
(21) Anmeldenummer: 20797401.5
(22) Anmeldetag: 15.10.2020
(51) Int. Cl.: C25B 1/04, C25B 9/73, C25B 9/19, C25B 13/00, C25B 15/02, C25B 9/05

(54) **ELEKTROLYSESYSTEM ZUM ZERLEGEN VON WASSER ZU WASSERSTOFF UND SAUERSTOFF UND EIN VERFAHREN ZUM BETREIBEN DES ELEKTROLYSESYSTEMS**
ELECTROLYSIS SYSTEM FOR BREAKING WATER DOWN INTO HYDROGEN AND OXYGEN AND METHOD FOR OPERATING THE ELECTROLYSIS SYSTEM
SYSTÈME D'ÉLECTROLYSE POUR DÉCOMPOSER L'EAU EN HYDROGÈNE ET OXYGÈNE ET PROCÉDÉ DE FONCTIONNEMENT DU SYSTÈME D'ÉLECTROLYSE

(30) Priorität: 28.11.2019 EP 19212114
(43) Veröffentlichungstag der Anmeldung: 20.07.2022
(73) Patentinhaber: Siemens Energy Global GmbH & Co. KG, 81739 München (DE)
(72) Erfinder: SCHACHERER, Christian, 92364 Deining (DE); WOLF, Erik, 91341 Röttenbach (DE)
(86) Internationale Anmeldenummer: PCT/EP2020/079046
(87) Internationale Veröffentlichungsnummer: WO 2021/104744

(56) Entgegenhaltungen:
- EP-A1- 3 489 393
- WO-A1-2018/066939
- DE-A1- 2 513 975
- DE-A1- 19 853 458
- JP-A- 2006 299 390
- KR-A- 20130 030 847
- US-A1- 2016 060 776
- Paulo Ricardo Stark: "Grundlagen der Niederspannungs-Schalttechnik", Sirius - Sentron - Sivacon, 1. Januar 2008 (2008-01-01), Seiten 1-1038, XP055638241, DE Gefunden im Internet: URL:https://support.industry.siemens.com/c s/document/34973099/grundlagen-der-nieders pannungs-schalttechnik?dti=0&lc=de-WW [gefunden am 2019-11-01]

## Beschreibung

Die Erfindung betrifft ein Elektrolysesystem zum Zerlegen von Wasser zu Wasserstoff und Sauerstoff und ein Verfahren zum Betreiben des Elektrolysesystem.

Ein Elektrolyseur ist eine Vorrichtung, die mit Hilfe von elektrischem Strom eine Stoffumwandlung herbeiführt (Elektrolyse). Entsprechend der Vielfalt an unterschiedlichen Elektrolysen gibt es auch eine Vielzahl von Elektrolyseuren, wie beispielsweise einen Elektrolyseur für eine Wasserstoffelektrolyse.

Aktuelle Überlegungen gehen dahin, mit Energie aus erneuerbaren Energiequellen in Zeiten mit viel Sonne und viel Wind, also mit überdurchschnittlicher Solarstrom- oder Windkrafterzeugung, Wertstoffe zu erzeugen. Ein Wertstoff kann insbesondere Wasserstoff sein, welcher mit Wasserelektrolyseuren erzeugt wird. Mittels des Wasserstoffs kann beispielsweise sogenanntes EE-Gas hergestellt werden.

Dabei erzeugt ein (Wasserstoffelektrolyse-) Elektrolyseur mit Hilfe der elektrischen Energie, insbesondere aus Windenergie oder Sonnenenergie, zunächst Wasserstoff. Danach wird der Wasserstoff in einem Sabatierprozess zusammen mit Kohlendioxid zur Herstellung von Methan verwendet. Das Methan kann dann beispielsweise in ein bereits vorhandenes Erdgasnetz eingespeist werden und ermöglicht so eine Speicherung und einen Transport von Energie zum Verbraucher und kann so ein elektrisches Netz entlasten. Alternativ dazu kann der vom Elektrolyseur erzeugte Wasserstoff auch unmittelbar weiterverwendet werden, beispielsweise für eine Brennstoffzelle. Bei einem Elektrolyseur für die Wasserstoffelektrolyse wird Wasser in Wasserstoff und Sauerstoff zerlegt. Bei einem PEM-Elektrolyseur wird typischerweise anodenseitig destilliertes Wasser als Edukt zugeführt und an einer protonendurchlässigen Membran (engl.: "Proton-Exchange-Membrane"; PEM) zu Wasserstoff und Sauerstoff gespalten. Das Wasser wird dabei an der Anode zu Sauerstoff oxidiert. Die Protonen passieren die protonendurchlässige Membran. Kathodenseitig wird Wasserstoff produziert. Eine Elektrolyseeinheit umfasst typischerweise wenigstens vier Elektrolysemodule. Ein Elektrolysemodul umfasst typischerweise 50 Elektrolysezellen.

Die Energie aus erneuerbaren Energien steht in Abhängigkeit der Wetterbedingungen nicht konstant zur Verfügung. PEM-Elektrolyseure können bei einer geringeren für die Elektrolyse zur Verfügung stehenden elektrischen Leistung in Teillast betreiben werden. Dies führt allerdings nachteilig dazu, dass die Betriebstemperatur des PEM-Elektrolyseurs sinkt. Weiterhin erhöht der Teillastbetrieb der Elektrolysezellen die Alterung der Elektrolysezellen, was nachteilig eine häufigere Wartung der Elektrolysezellen zur Folge hat. Aufgrund des Teillastbetriebs der Elektrolysezellen kann sich nachteilig auch die Zusammensetzung der Produktgase aus der Elektrolyse ändern. WO 2018/066939, DE 198 53 458 A1 und EP 3 489 393 A1 offenbaren PEM-Elektrolyseure mit Teillastbetrieb oder mit Diodenumschaltung.

Es ist daher Aufgabe der Erfindung ein Elektrolysesystem und ein Verfahren zum Betreiben eines Elektrolysesystems anzugeben, welches bei Teillast betrieben werden kann und dabei die oben genannten Nachteile überwindet.

Die Erfindung wird mit einem Elektrolysesystem gemäß Anspruch 1 und einem Verfahren gemäß Anspruch 8 gelöst. Das erfindungsgemäße Elektrolysesystem zum Zerlegen von Wasser zu Wasserstoff und Sauerstoff umfasst wenigstens zwei Elektrolysemodule. Jedes Elektrolysemodul umfasst wenigstens zwei Elektrolysezellen. Eine Elektrolysezelle umfasst einen Anodenraum und einen Kathodenraum, wobei der Anodenraum von dem Kathodenraum durch eine Protonenaustauschmembran getrennt ist. Zu wenigstens einem Elektrolysemodul ist eine gleichstromfähige Schaltvorrichtung elektrisch parallelgeschaltet.

Das erfindungsgemäße Verfahren zum Betreiben eines Elektrolysesystems zum Zerlegen von Wasser zu Wasserstoff und Sauerstoff umfasst mehrere Schritte. Zunächst erfolgt das Bereitstellen von wenigstens zwei Elektrolysemodulen, wobei jedes Elektrolysemodul wenigstens zwei Elektrolysezellen umfasst. Eine Elektrolysezelle umfasst einen Anodenraum und einen Kathodenraum. Der Anodenraum ist von dem Kathodenraum durch eine Protonenaustauschmembran getrennt. Eine gleichstromfähige Schaltvorrichtung ist zu wenigstens einem Elektrolysemodul elektrisch parallel angeordnet. Die wenigstens zwei Elektrolysemodule werden mittels elektrischen Stroms betrieben. Bei Absinken einer für die Elektrolyse zur Verfügung stehenden elektrischen Leistung wird wenigstens eine Schaltvorrichtung geschlossen. Das wenigstens eine Elektrolysemodul wird durch die wenigstens eine Schaltvorrichtung überbrückt. Anschließend wird das Elektrolysesystem betrieben, wobei die Anzahl an betriebenen Elektrolysemodulen um die Anzahl an überbrückten Elektrolysemodulen verringert ist. Beim Anstieg der für die Elektrolyse zur Verfügung stehenden elektrischen Leistung wird wenigstens eine Schaltvorrichtung wiederum geöffnet.

Vorteilhaft ist es durch das Überbrücken von wenigstens einem Elektrolysemodul möglich, das Elektrolysesystem in Teillast zu betreiben, ohne dass einzelne Elektrolysemodule in Teillast betrieben werden. Die Stromdichte über die verbleibenden Elektrolysemodule, die betrieben werden, bleibt hoch, so dass ein Betrieb dieser einzelnen Elektrolysemodule in Teillast, also bei geringer Stromdichte, verhindert wird. Vorteilhaft wird mithilfe dieses Elektrolysesystems eine vorschnelle Alterung der Elektrolysezellen in den einzelnen Elektrolysemodulen aufgrund von Teillastbetrieb verhindert. Die Elektrolysemodule, die weiterhin betrieben werden, verhindern vorteilhaft ein Auskühlen des gesamten Elektrolysesystems. Auch die Produktgasqualität bleibt vorteilhaft konstant, da ein einzelnes Elektrolysemodul bei gleichbleibender Stromdichte und somit bei konstanter Wasserstofferzeugungsrate betrieben werden kann.

In einer vorteilhaften Ausgestaltung und Weiterbildung der Erfindung sind die Elektrolysezellen elektrisch in Reihe geschaltet auch die Elektrolysemodule sind elektrisch in Reihe geschaltet. Die Elektrolysemodule können zu einem Stack zusammengefasst werden. Die Leistung eines solchen Stacks kann vorteilhaft durch Hintereinanderschalten der Elektrolysemodule nach Bedarf angepasst werden. Ein Stack umfasst insbesondere ein Elektrolysesystem mit einer Leistung im Bereich von 1 bis 50 MW.

In einer weiteren vorteilhaften Ausgestaltung und Weiterbildung der Erfindung ist zwischen zwei Elektrolysemodulen eine Druckplatte angeordnet. Die Druckplatte ist elektrisch leitend mit dem Elektrolysemodulen verbunden. Die einzelnen Elektrolysezellen werden miteinander verpresst. Das Zusammenpressen der einzelnen Membranlagen der einzelnen Elektrolysezellen erfolgt vorteilhaft mit Druckplatten. Es werden typischerweise von 50 bis zu 300 Protonenaustauschmembran-Lagen (PEM - Lagen) miteinander verpresst. Vorteilhaft können mittels der Druckplatten mehrere Elektrolysezellen zu einem Elektrolysemodul zusammengepresst werden. Mehrere Elektrolysemodule können wiederum durch Aneinanderreihen der Elektrolysemodule mit Druckplatten dazwischen zu einem Stack zusammengefasst werden. Vorteilhaft ermöglicht der Einsatz der Druckplatten somit eine flexible Anzahl von Elektrolysemodulen zu einem Elektrolysesystem zusammenzufassen.

In einer vorteilhaften Ausgestaltung und Weiterbildung der Erfindung ist die Schaltvorrichtung elektrisch leitend mit zwei Druckplatten, die wenigstens ein Elektrolysemodul begrenzen, verbunden. Vorteilhaft kann so über das Schließen der Schaltvorrichtung das wenigstens eine Elektrolysemodul überbrückt werden. Das Anschließen der Schaltervorrichtung lässt sich über das Anschließen an die Druckplatten einfach realisieren.

Laut der Erfindung weist die Schaltvorrichtung in einem geschlossenen Zustand einen geringeren elektrischen Widerstand auf als das Elektrolysemodul. Somit fließt vorteilhaft Strom durch die geschlossene Schaltvorrichtung, sodass einzelne Elektrolysemodule in Zeiten, in denen wenig elektrischer Strom zur Verfügung steht, elektrisch überbrückt werden. Weiterhin ist eine niederinduktive Leistungsführung vorteilhaft für eine Kommutierung des elektrischen Stroms vom Schalter zurück in das Modul.

In einer weiteren vorteilhaften Ausgestaltung und Weiterbildung der Erfindung ist die Schaltvorrichtung als eine gekapselte Schaltvorrichtung ausgeführt. Als gekapselt wird hier eine Schaltvorrichtung verstanden, die von einer Hülle umgeben ist, welche Lichtbögen in einem isolierten Volumen umschließt. Besonders bevorzugt ist die Schaltvorrichtung eine Vakuumschaltröhre oder ein lebender Behälterunterbrecher (engl.: "Live Tank") oder toter Behälterunterbrecher (engl.: "Dead Tank"), wie sie in der Hochspannungstechnik eingesetzt werden. Vorteilhaft wird durch das Verwenden von gekapselten Schaltvorrichtung vermieden, dass Lichtbögen in einer explosionsgefährdeten Umgebung insbesondere umfassend Wasserstoff, ausgebildet werden. Somit erhöht der Einsatz der gekapselten Schaltvorrichtung die Sicherheit des Elektrolysesystems.

In einer weiteren vorteilhaften Ausgestaltung und Weiterbildung der Erfindung wird bei Öffnen der Schaltvorrichtung der Gleichstromfluss von der Schaltvorrichtung in das Elektrolysemodul kommutiert. Durch das Wechseln des Stromflusses wird vorteilhaft das Elektrolysemodul, welches zuvor überbrückt wurde, wieder in Betrieb genommen.

In einer weiteren vorteilhaften Ausgestaltung und Weiterbildung der Erfindung wird die Schaltvorrichtung beim Kommutieren mit einer Lichtbogenspannung von wenigstens 100 V, insbesondere von wenigstens 120 V betrieben. Vorteilhaft liegt der elektrische Strom in der Schaltvorrichtung oder in einem Elektrolysemodul in einem Bereich von 2 kA bis 10 kA. Vorteilhaft kann so der Strom eines Elektrolysemoduls umfassend bis zu 30 Elektrolysezellen, besonders bevorzugt bis zu 300 Elektrolysezellen, überbrückt werden.

In einer weiteren vorteilhaften Ausgestaltung und Weiterbildung der Erfindung werden mehrere Schaltstrecken zur Überbrückung eines Moduls in Reihe geschaltet. Die erhöht die Lichtbogenbrennspannung vorteilhaft. Dies schließt Konzepte mit Löschblechen zur Aufspaltung eines Lichtbogens zur Erhöhung der Lichtbogenbrennspannung ein. Ebenso weitere Verfahren, die eine Erhöhung der Lichtbogenbrennspannung zur Folge haben, wie insbesondere eine Beeinflussung durch Magnetfelder, mechanische Einschnürung des Lichtbogens, Verlängerung des Lichtbogens oder Kühlung des Lichtbogens.

Laut der Erfindung wird eine niederohmiger Widerstand oder eine Diode in Vorwärtsrichtung in Reihe mit dem Schaltelement verschalter, somit werden die Polarität und eine Schutzspannung für den Stack aufrechterhalten.

In einer weiteren vorteilhaften Ausgestaltung und Weiterbildung der Erfindung werden wenigstens zwei Elektrolysemodule mit einer Schaltvorrichtung, welche zu den Elektrolysemodulen parallel angeordnet ist, überbrückt. Sollen weitere Module überbrückt werden, werden zusätzlich vier Module überbrückt. Die vorteilhafte Systematik beim Überbrücken der Module ist die Binärreihe 2ⁿ (1 Modul, 2 Module, 4 Module, 8 Module etc.). Vorteilhaft kann so die Anzahl der Schaltvorrichtungen verringert werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: Elektrolysesystem mit vier Elektrolysemodulen mit drei Schaltvorrichtungen in einer offenen Position;
- Figur 2: Elektrolysesystem mit vier Elektrolysemodulen mit zwei Schaltvorrichtungen, eine in einer geöffneten Position, eine in einer geschlossenen Position.

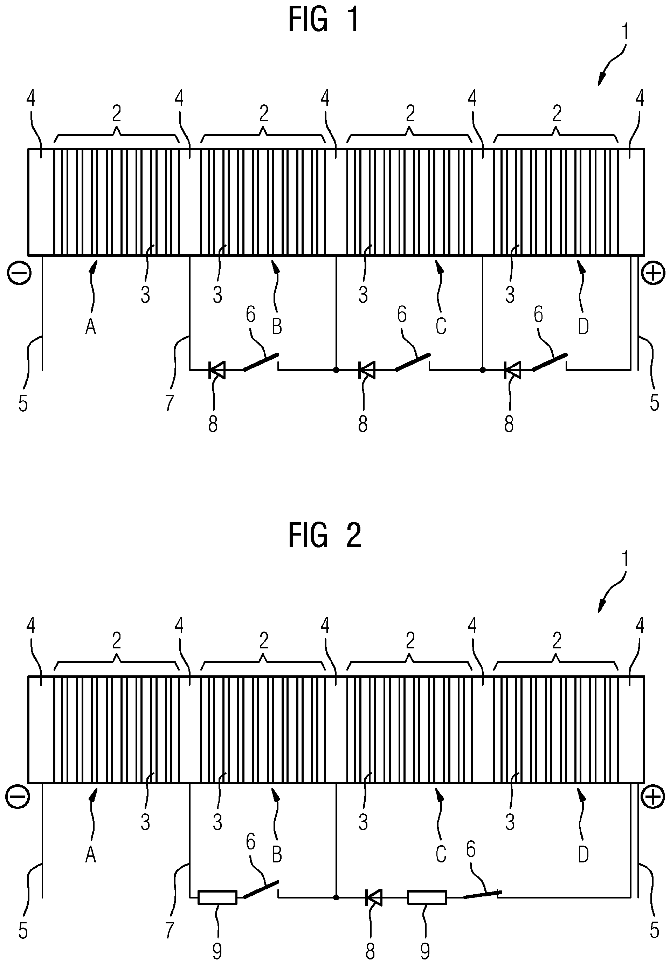

Figur 1 zeigt ein Elektrolysesystem 1 umfassend vier Elektrolysemodule 2. Jedes Elektrolysemodul 2 umfasst mehrere Elektrolysezellen 3. Die Elektrolysezellen 3 sind zwischen zwei Druckplatten 4 angeordnet. Die Druckplatten 4 pressen die Elektrolysezellen, welche insbesondere eine Protonenaustauschmembran umfassen, zusammen. Die Druckplatten 4, welche am Rand des Elektrolysesystems 1 angeordnet sind, sind über eine elektrischen Anschluss 5 elektrisch angeschlossen. Zu den Elektrolysemodulen B, C und D des Elektrolysesystems 1 sind parallel drei Schaltvorrichtungen 6 angeordnet. Die Schaltvorrichtungen 6 sind dabei elektrisch parallel zu den Elektrolysemodulen 2 angeordnet. In diesem Beispiel überbrückt jede Schaltvorrichtung 6 ein Elektrolysemodul 2. Somit ist jede Schaltvorrichtung 6 mit den Druckplatten 4 elektrisch verbunden, die ein Elektrolysemodul 2 begrenzen.

In diesem Beispiel erfolgt die Elektrolyse, das Zerlegen von Wasser zu Wasserstoff und Sauerstoff, in allen Elektrolysemodulen 2, da alle Schaltvorrichtungen 6 geöffnet sind. Die Elektrolyse wird mit Gleichstrom durchgeführt. Somit sind die Schaltvorrichtungen 6 als Gleichstrom-Schaltvorrichtungen ausgebildet. Eine Diode 8 ist in Vorwärtsrichtung in Reihe mit dem Schaltelement verschaltet, somit werden die Polarität und eine Schutzspannung für den Stack aufrechterhalten.

Das Elektrolysesystem 1 wird in diesem Beispiel mit Volllast betrieben. Nimmt nun die elektrische Leistung im Netz, insbesondere aufgrund von wenig Wind und wenig Sonne, ab, so kann wenigstens eine Schaltvorrichtung 6 geschlossen werden. Somit können modular die Elektrolysemodule B, C und D abgeschalten, bzw. überbrückt, werden. In diesem Beispiel wird das Elektrolysemodul A bei Betrieb des Elektrolysesystems 1 immer betrieben. Werden nun in Abhängigkeit der zur Verfügung stehenden elektrischen Leistung die anderen Module abgeschalten, so kann das Elektrolysemodul A mit einer konstanten Leistungsdichte betrieben werden. Vorteilhaft werden somit keine Elektrolysemodule, bzw. Elektrolysezellen 3, in Teillast betrieben. Besonders vorteilhaft ist es, die Elektrolysemodule zeitlich nacheinander zu überbrücken. Insbesondere kann zunächst Modul A für eine festgesetzte Zeitdauer überbrückt werden. Im Anschluss kann Modul B oder Modul C für eine ähnliche Zeitdauer überbrückt werden. Somit werden die Module gleichmäßig betrieben und belastet. Durch das Überbrücken wird verhindert, dass die Elektrolysezellen 3 schnell altern. Weiterhin wird gewährleistet, dass die Produktgasqualität, insbesondere des Wasserstoffs, konstant bleibt.

In Figur 2 ist ebenfalls ein Elektrolysesystem 1 mit vier Elektrolysemodulen 2 gezeigt. Die Elektrolysemodule werden wiederum von Druckplatten 4 begrenzt, wobei die Druckplatten 4 die Elektrolysezellen 3 zusammenpressen. In diesem Beispiel sind zwei Schaltvorrichtungen 6 parallel zu den Elektrolysemodulen 2 angeordnet. Eine Schaltvorrichtung 6 ist parallel zu dem Elektrolysemodul B angeordnet. Eine weitere Schaltvorrichtung ist parallel zu den Elektrolysemodulen C und D angeordnet. Eine niederohmiger Widerstand 9 ist in Reihe mit dem Schaltelement verschaltet. Ein weitere niederohmiger Widerstand 9 ist in Reihe mit einer Diode 8 geschaltet. Es ist ebenso möglich, nur niederohmige Widerstände 9 ohne Diode 8 einzusetzen. Damit werden die Polarität und eine Schutzspannung für den Stack mittels der Diode und/oder dem niederohmigen Widerstand aufrechterhalten.

Die Schaltvorrichtung 6, welche die Elektrolysemodule C und D überbrückt, ist in diesem Beispiel geschlossen. In diesem Beispiel wird also das Elektrolysesystem in Teillast betrieben. Dabei werden die Elektrolysemodule A und B jeweils bei konstanter elektrischer Leistung betrieben. Der Teillastbetrieb wird durch das Schließen der Schaltvorrichtung 6 ermöglicht, wodurch die Elektrolysemodule C und D elektrisch überbrückt werden. Steigt nun die verfügbare elektrische Leistung im Stromnetz wieder an, kann die Schaltvorrichtung 6 wiederum geöffnet werden. Besonders vorteilhaft ist die Schaltvorrichtung 6 als Vakuumröhre, insbesondere als Niederspannungsvakuumröhre, ausgebildet. Ebenfalls geeignet, aber nicht in der Zeichnung dargestellt, sind gekapselte Gasschaltstrecken analog zu einem lebenden Behälterunterbrecher (engl.: "Live Tank") oder toten Behälterunterbrecher (engl.: "Dead Tank"), wie sie in der Hochspannungstechnik eingesetzt werden. Somit wird verhindert, dass sich ein offener Lichtbogen beim Kommutieren des Stroms bildet. Dies ist wünschenswert, da in den Elektrolysemodulen explosionsgefährdete Gase, insbesondere Wasserstoff, entsteht.

In beiden Ausführungsbeispielen werden vier Elektrolysemodule 2 gezeigt. Dies ist eine vereinfachte Darstellung. Es ist ebenfalls im Sinne der Erfindung, dass eine größere Anzahl Elektrolysemodule in Reihe hintereinandergeschaltet werden. Ebenfalls ist es möglich, weitere gestaffelte Verschaltungen der Schaltanordnungen 6 anzuordnen, um einerseits eine ausreichende Menge an Schaltvorrichtungen 6 bereitzustellen und andererseits eine zu große Anzahl an Schaltvorrichtungen 6 zu verhindern.

Obwohl die Erfindung im Detail durch bevorzugte Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

### Bezugszeichenliste

- 1: Elektrolysesystem
- 2: Elektrolysemodul
- 3: Elektrolysezelle
- 4: Druckplatte
- 5: elektrischer Anschluss
- 6: Schaltvorrichtung
- 7: elektrische Leitung
- 8: Diode
- 9: elektrischer Widerstand
- A: Elektrolysemodul A
- B: Elektrolysemodul B
- C: Elektrolysemodul C
- D: Elektrolysemodul D

## Patentansprüche

1. Elektrolysesystem (1) zum Zerlegen von Wasser zu Wasserstoff und Sauerstoff mit wenigstens zwei Elektrolysemodulen (2), wobei jedes Elektrolysemodul (2) wenigstens zwei Elektrolysezellen (3) umfasst, wobei eine Elektrolysezelle (3) einen Anodenraum und einen Kathodenraum umfasst und der Anodenraum von dem Kathodenraum durch eine Protonenaustauschmembran getrennt wird, wobei zu wenigstens einem Elektrolysemodul (2) elektrisch parallel wenigstens eine gleichstromfähige Schaltvorrichtung (6) angeordnet ist, wobei die Schaltvorrichtung (6) in einem geschlossenen Zustand einen geringeren elektrischen Widerstand als das Elektrolysemodul (2) aufweist, und wobei eine Diode (8) in Vorwärtsrichtung und/oder ein niederohmiger Widerstand (9) in Reihe mit der Schaltvorrichtung (6) geschaltet ist, so dass eine Polarität und eine Schutzspannung für das Elektrolysemodul (2) aufrechterhalten ist.

2. Elektrolysesystem (1) nach Anspruch 1, wobei die Elektrolysezellen (3) elektrisch in Reihe geschaltet angeordnet sind.

3. Elektrolysesystem (1) nach einem der vorhergehenden Ansprüche, wobei die Elektrolysemodule (2) elektrisch in Reihe geschaltet angeordnet sind.

4. Elektrolysesystem (1) nach einem der vorhergehenden Ansprüche, wobei zwischen zwei Elektrolysemodulen (2) eine Druckplatte (4) angeordnet ist und die Druckplatte (4) elektrisch leitend mit den Elektrolysemodulen (2) verbunden ist.

5. Elektrolysesystem (1) nach Anspruch 4, wobei die Schaltvorrichtung (6) elektrisch leitend mit zwei Druckplatten (4), die wenigstens ein Elektrolysemodul (2) begrenzen, verbunden ist.

6. Elektrolysesystem (1) nach einem der vorhergehenden Ansprüche, wobei die Schaltvorrichtung (6) eine gekapselte Schaltvorrichtung ist.

7. Elektrolysesystem (1) nach einem der vorhergehenden Ansprüche, wobei die Schaltvorrichtung (6) eine Vakuumschaltröhre ist.

8. Verfahren zum Betreiben eines Elektrolysesystems (1) zum Zerlegen von Wasser zu Wasserstoff und Sauerstoff mit mehreren Schritten:
- Bereitstellen von wenigstens zwei Elektrolysemodulen (2), wobei jedes Elektrolysemodul (2) wenigstens zwei Elektrolysezellen (3) umfasst, wobei eine Elektrolysezelle (3) einen Anodenraum und einen Kathodenraum umfasst und der Anodenraum von dem Kathodenraum durch eine Protonenaustauschmembran getrennt wird, wobei zu wenigstens einem Elektrolysemodul (2) elektrisch parallel wenigstens eine gleichstromfähige Schaltvorrichtung (6) angeordnet ist, und wobei die Schaltvorrichtung (6) in einem geschlossenen Zustand einen geringeren elektrischen Widerstand als das Elektrolysemodul (2) aufweist, und wobei eine Diode (8) in Vorwärtsrichtung und/oder ein niederohmiger Widerstand (9) in Reihe mit der Schaltvorrichtung (6) geschaltet ist, so dass im geschlossenen Zustand eine Polarität und eine Schutzspannung für das Elektrolysemodul (2) aufrechterhalten wird,
- Betreiben von wenigstens zwei Elektrolysemodulen (2),
- Schließen wenigstens einer Schaltvorrichtung (6) bei Absinken der zur Verfügung stehenden elektrischen Leistung und Überbrücken wenigstens eines Elektrolysemoduls (2) durch die Schaltvorrichtung (6),
- Betreiben einer um die Anzahl an überbrückten Elektrolysemodulen (2) verringerte Anzahl an Elektrolysemodulen (2),
- Öffnen wenigstens einer Schaltvorrichtung (6) bei Anstieg der zur Verfügung stehenden elektrischen Leistung.

9. Verfahren nach Anspruch 8, wobei bei Öffnen der Schaltvorrichtung (6) Gleichstrom von der Schaltvorrichtung (6) in das Elektrolysemodul (2) kommutiert wird.

10. Verfahren nach Anspruch 9, wobei die Schaltvorrichtung (6) beim Kommutieren mit einer Lichtbogenspannung von wenigstens 100 V betrieben wird.

11. Verfahren nach einem der Ansprüche 8 bis 10, wobei der elektrische Strom in der Schaltvorrichtung (6) oder in einem Elektrolysemodul (2) in einem Bereich von 2 kA bis 10 kA liegt.

12. Verfahren nach einem der Ansprüche 8 bis 11, wobei wenigstens zwei Elektrolysemodule (2) mit einer Schaltvorrichtung (6) parallel überbrückt werden.

## Claims

1. Electrolysis system (1) for decomposition of water to afford hydrogen and oxygen comprising at least two electrolysis modules (2), wherein each electrolysis module (2) comprises at least two electrolysis cells (3), wherein an electrolysis cell (3) comprises an anode space and a cathode space and the anode space is separated from the cathode space by a proton-exchange membrane, wherein at least one direct current-capable switching apparatus (6) is arranged electrically in parallel with at least one electrolysis module (2), wherein the switching apparatus (6) in a closed state has a lower electrical resistance than the electrolysis module (2), and wherein a diode (8) in the forward direction and/or a low-ohm resistor (9) is serially connected to the switching apparatus (6) so as to maintain a polarity and a protective voltage for the electrolysis module (2).

2. Electrolysis system (1) according to Claim 1, wherein the electrolysis cells (3) are arranged electrically connected in series.

3. Electrolysis system (1) according to either of the preceding claims, wherein the electrolysis modules (2) are arranged electrically connected in series.

4. Electrolysis system (1) according to any of the preceding claims, wherein a pressure plate (4) is arranged between two electrolysis modules (2) and the pressure plate (4) is electrically connected to the electrolysis modules (2).

5. Electrolysis system (1) according to Claim 4, wherein the switching apparatus (6) is electrically connected to two pressure plates (4) which delimit at least one electrolysis module (2).

6. Electrolysis system (1) according to any of the preceding claims, wherein the switching apparatus (6) is an encapsulated switching apparatus.

7. Electrolysis system (1) according to any of the preceding claims, wherein the switching apparatus (6) is a vacuum interrupter.

8. Process for operating an electrolysis system (1) for decomposition of water to afford hydrogen and oxygen comprising a plurality of steps:
- providing at least two electrolysis modules (2), wherein each electrolysis module (2) comprises at least two electrolysis cells (3), wherein an electrolysis cell (3) comprises an anode space and a cathode space and the anode space is separated from the cathode space by a proton-exchange membrane, wherein at least one direct current-capable switching apparatus (6) is arranged electrically in parallel with at least one electrolysis module (2), and wherein the switching apparatus (6) in a closed state has a lower electrical resistance than the electrolysis module (2), and wherein a diode (8) in the forward direction and/or a low-ohm resistor (9) is serially connected to the switching apparatus (6) so as to maintain a polarity and a protective voltage for the electrolysis module (2) in the closed state,
- operating at least two electrolysis modules (2),
- closing at least one switching apparatus (6) in case of a fall in the available electrical power and bridging at least one electrolysis module (2) via the switching apparatus (6),
- operating a number of electrolysis modules (2) which is reduced by the number of bridged electrolysis modules (2),
- opening at least one switching apparatus (6) in case of an increase in the available electrical power.

9. Process according to Claim 8, wherein opening the switching apparatus (6) commutates the direct current flow from the switching apparatus (6) into the electrolysis module (2).

10. Process according to Claim 9, wherein the switching apparatus (6) is operated with an arc voltage of at least 100 V during commutation.

11. Process according to any of Claims 8 to 10, wherein the electrical current in the switching apparatus (6) or in an electrolysis module (2) is in a range from 2 kA to 10 kA.

12. Process according to any of Claims 8 to 11, wherein at least two electrolysis modules (2) are bridged in parallel with a switching apparatus (6).

## Revendications

1. Système (1) d'électrolyse pour la décomposition de l'eau en hydrogène et en oxygène comprenant au moins deux modules (2) d'électrolyse, dans lequel chaque module (2) d'électrolyse comprend au moins deux cellules (3) d'électrolyse, dans lequel une cellule (3) d'électrolyse comprend un espace anodique et un espace cathodique et l'espace anodique est séparé de l'espace cathodique par une membrane d'échange de protons, dans lequel au moins un dispositif (6) de coupure apte au courant continu est monté en parallèle électroniquement avec au moins un module (2) d'électrolyse, dans lequel le dispositif (6) de coupure a, dans un état fermé, une résistance électrique plus petite que le module (2) d'électrolyse et dans lequel une diode (8) dans le sens direct et/ou une résistance (9) de petite valeur ohmique est montée en série avec le dispositif (6) de coupure de manière à maintenir une polarité et une tension de protection pour le module (2) d'électrolyse.

2. Système (1) d'électrolyse suivant la revendication 1, dans lequel les cellules (3) d'électrolyse sont montées en série électriquement.

3. Système (1) d'électrolyse suivant l'une des revendications précédentes, dans lequel les modules (2) d'électrolyse sont montés en série électriquement.

4. Système (1) d'électrolyse suivant l'une des revendications précédentes, dans lequel une plaque (4) d'appui est montée entre deux modules (2) d'électrolyse et la plaque (4) d'appui est reliée d'une manière conductrice de l'électricité aux modules (2) d'électrolyse.

5. Système (1) d'électrolyse suivant la revendication 4, dans lequel le dispositif (6) de coupure est relié d'une manière conductrice de l'électricité à deux plaques (4) d'appui, qui délimitent le au moins un module (2) d'électrolyse.

6. Système (1) d'électrolyse suivant l'une des revendications précédentes, dans lequel le dispositif (6) de coupure est un dispositif de coupure sous boîtier.

7. Système (1) d'électrolyse suivant l'une des revendications précédentes, dans lequel le dispositif (6) de coupure est un tube de commutation à vide.

8. Procédé pour faire fonctionner un système (1) d'électrolyse pour la décomposition de l'eau en hydrogène et en oxygène comprenant plusieurs stades :
- on se procure au moins deux modules (2) d'électrolyse, dans lequel chaque module (2) d'électrolyse comprend au moins deux cellules (3) d'électrolyse, dans lequel une cellule (3) d'électrolyse comprend un espace anodique et un espace cathodique et l'espace anodique est séparé de l'espace cathodique par une membrane d'échange de protons, dans lequel au moins un dispositif (6) de coupure apte au courant continu est monté en parallèle électroniquement avec au moins un module (2) d'électrolyse, dans lequel le dispositif (6) de coupure a, dans un état fermé, une résistance électrique plus petite que le module (2) d'électrolyse et dans lequel une diode (8) dans le sens direct et/ou une résistance (9) de petite valeur ohmique montée en série avec le dispositif (6) de coupure de manière à maintenir une polarité et une tension de protection pour le module (2) d'électrolyse,
- on fait fonctionner les au moins deux modules (2) d'électrolyse,
- on ferme le au moins un dispositif (6) de coupure si la puissance électrique disponible est diminuée et on court-circuite au moins un module (2) d'électrolyse par le dispositif (6) de coupure,
- on fait fonctionner un nombre, diminué du nombre de modules (2) d'électrolyse court-circuités, de modules (2) d'électrolyse,
- on ouvre le au moins un dispositif (6) de coupure si la puissance électrique disponible augmente.

9. Procédé suivant la revendication 8, dans lequel à l'ouverture du dispositif (6) de coupure, on commute du courant continu par le dispositif (6) de coupure aux modules (2) d'électrolyse.

10. Procédé suivant la revendication 9, dans lequel on fait fonctionner le dispositif (6) de coupure à la commutation à une tension d'arc électrique de moins de 100 V.

11. Procédé suivant l'une des revendications 8 à 10, dans lequel le courant électrique dans le dispositif (6) de coupure ou dans un module (2) d'électrolyse est dans une plage de 2 kA à 10 kA.

12. Procédé suivant l'une des revendications 8 à 11, dans lequel on court-circuite en parallèle au moins deux modules (2) d'électrolyse par un dispositif (6) de coupure.
